(19) Europäisches Patentamt
European Patent Office
Office européen des brevets

(11) **EP 2 599 215 B1**

(12) **EUROPÄISCHE PATENTSCHRIFT**

(45) Veröffentlichungstag und Bekanntmachung des Hinweises auf die Patenterteilung:
**19.05.2021   Patentblatt 2021/20**

(21) Anmeldenummer: **11728856.3**

(22) Anmeldetag: **01.07.2011**

(51) Int Cl.:
*H02P 29/02* (2016.01)     *H02P 29/00* (2016.01)
*H02P 6/08* (2016.01)       *H02P 9/14* (2006.01)
*H02P 9/30* (2006.01)       *B60L 50/10* (2019.01)

(86) Internationale Anmeldenummer:
**PCT/EP2011/061151**

(87) Internationale Veröffentlichungsnummer:
**WO 2012/013447 (02.02.2012 Gazette 2012/05)**

(54) **VERFAHREN UND VORRICHTUNG ZUR REGELUNG FREMDERREGTER SYNCHRONMASCHINEN**

METHOD AND DEVICE FOR REGULATING SEPARATELY EXCITED SYNCHRONOUS MACHINES

PROCÉDÉ ET DISPOSITIF DE RÉGULATION DE MACHINES SYNCHRONES À EXCITATION EXTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.07.2010   EP 10007849**
**05.11.2010   DE 102010043492**

(43) Veröffentlichungstag der Anmeldung:
**05.06.2013   Patentblatt 2013/23**

(73) Patentinhaber: **Vitesco Technologies GmbH**
**30165 Hannover (DE)**

(72) Erfinder:
• **MÄRGNER, Moritz**
**10437 Berlin (DE)**
• **MILL, Oliver**
**16548 Glienicke / Nordbahn (DE)**
• **JASZCZAK, Krzysztof**
**10551 Berlin (DE)**

(56) Entgegenhaltungen:
EP-A1- 1 923 988          WO-A2-2009/003478
DE-A1-102005 050 741      US-A1- 2004 162 696
US-A1- 2006 126 250       US-A1- 2009 088 294

EP 2 599 215 B1

**Beschreibung**

Die vorliegende Erfindung betrifft ein Regelungsverfahren und eine Vorrichtung zur Regelung von Synchronmaschinen, insbesondere fremderregter Synchronmaschinen.

Die Synchronmaschine gehört zu den wichtigsten Typen elektrischer Maschinen. Traditionell wird die Synchronmaschine beispielsweise zur Erzeugung elektrischer Energie eingesetzt. Zunehmend gewinnt die elektrische Maschine, insbesondere die Synchronmaschine, an Bedeutung als Antriebsaggregat in Kraftfahrzeugen. Dabei kann die Synchronmaschine beispielsweise in rein elektrisch angetriebenen Fahrzeugen aber auch in Hybridfahrzeugen eingesetzt werden. Im Wesentlichen unterscheidet man permanenterregte Synchronmaschinen und fremderregte Synchronmaschinen. Permanenterregte Synchronmaschinen weisen einen Rotor auf, in dem Permanentmagnete angeordnet sind. Bei einer fremderregten Synchronmaschine wird ein Rotor mit einer Wicklung verwendet, die über Schleifringe von einem Erregerstrom durchflossen wird, wodurch rotorseitig ein magnetischer Erregerfluss bzw. Rotorfluss erzeugt wird, der mit einem über bestromte Statorwicklungen generiertem Drehfeld in Wechselwirkung tritt.

Fremderregte Synchronmaschinen werden beispielsweise in Hybridfahrzeugen, insbesondere in Achshybridantriebssystemen, eingesetzt. Die Hybrid-Technologie ist im Wesentlichen dadurch charakterisiert, dass zwei Antriebsaggregate, eine Verbrennungsmaschine sowie eine elektrische Maschine, im Fahrzeug angeordnet sind. Der Motor kann hierbei beispielsweise achsparallel über ein zweistufiges Stirnradgetriebe mit einem Achsdifferential verbunden werden. Insbesondere bei Kraftfahrzeugantriebsaggregaten ist die Sicherheit ein besonderes Kriterium, das bei der Wahl des Typs elektrischer Maschinen berücksichtigt werden muss. Der Motor soll idealerweise jederzeit abschaltbar sein. Ein Vorteil der fremderregten Synchronmaschine ist, dass der rotorseitige Erregerstrom abgeschaltet werden kann, wohingegen bei permanentmagneterregten Synchronmaschinen der rotorseitige magnetische Erregerfluss im Normalbetrieb nicht abgeschaltet werden kann. Ein wichtiger Aspekt bei elektrischen Maschinen in Kraftfahrzeugen sind die im Betrieb auftretenden Verluste, da sie entweder völlig aus einem Akkumulator oder über einen an ein Verbrennungsaggregat gekoppelten Generator versorgt werden müssen. Zusammen mit den Umrichterverlusten spricht man beispielsweise von Fahrzyklusverlusten. Bei der Auslegung der elektrischen Maschine, insbesondere der fremderregten Synchronmaschine und der zugehörigen Regelung mit Umrichter ist die Verlustcharakteristik ein besonderes Kriterium.

Die Druckschrift US 2006/0126250 A1 beschreibt eine Schutzeinrichtung für eine elektrische Vorrichtung mit einem Temperatursensor, wobei die Ausgangsleistung gemäß einer tatsächlichen Temperatur abgegeben wird. Die tatsächliche Temperatur wird anhand der gemessenen Temperatur des Temperatursensors und der Wärmeabgabecharakteristik der Vorrichtung geschätzt.

Die Druckschrift WO 2009/003478 A2 beschreibt eine Windturbine mit einem Generator, dessen Momentantemperatur maßgeblich für die Ausgangsleistung ist.

Es ist Aufgabe der vorliegenden Erfindung, ein Regelungsverfahren und eine entsprechende Vorrichtung zur Verfügung zu stellen, die einen verlustoptimierten Betrieb einer fremderregten Synchronmaschine bei hoher Regelungsdynamik ermöglicht.

Die Aufgabe wird gelöst durch ein Verfahren gemäß Anspruch 1 bzw. durch eine Vorrichtung gemäß Anspruch 9. Ausgestaltungen und Weiterbildungen des Erfindungsgedankens sind Gegenstand von Unteransprüchen.

Insbesondere wird die Aufgabe gelöst durch ein Regelungsverfahren für eine einen Stator und einen Rotor aufweisende, fremderregte Synchronmaschine, mit den Schritten:

- Bereitstellen von Referenzwerten für Stator- und Rotorströme, wobei der Referenzwert für den Statorstrom und/oder der Referenzwert für den Rotorstrom von einem vorgegebenen Referenzdrehmoment abhängig ist und die Referenzwerte für die Stator- und Rotorströme in einer Lookup-Tabelle als Funktion des Referenzdrehmoments hinterlegt sind, wobei die Referenzwerte, die in der Lookup-Tabelle hinterlegt sind, jeweils einem verlustminimalen Betriebspunkt, repräsentiert durch entsprechende Betriebsparameter, entsprechen;

- Bereitstellen von Maximalwerten für Stator- und Rotorströme, wobei die Maximalwerte zuvor festgelegte, maximal zulässige Verluste der Synchronmaschine charakterisieren, und wobei die Maximalwerte für die Stator- und Rotorströme aus Betriebsparametern gebildet werden, die den Zustand der Synchronmaschine repräsentieren;

- Vergleichen der Referenzwerte für Stator- und/oder Rotorströme mit den entsprechenden Maximalwerten und

- Reduzieren des Referenzdrehmoments um einen Drehmomentwert wenn zumindest einer der Referenzwerte dessen entsprechenden Maximalwert erreicht oder überschreitet.

Eine erfindungsgemäße Regelungsvorrichtung, die dazu ausgebildet ist, eine fremderregte Synchronmaschine mit einem Stator und einem Rotor verlustarm zu regeln, weist folgende Komponenten auf:

- eine Speichereinheit, die dazu ausgebildet ist, Referenzwerte für Stator- und Rotorströme sowie Maximalwerte für Stator- und Rotorströme bereitzustellen, wobei die Referenzwerte, die in einer Lookup-Tabelle hinterlegt sind, jeweils einem verlustminimalen Betriebspunkt, repräsentiert durch entsprechende Betriebsparameter, entsprechen, wobei der Referenzwert für den Statorstrom und/oder der Referenzwert für den Rotorstrom von einem vorgegebenen Referenzdrehmoment abhängig ist, und wobei in der Speichereinheit die Referenzwerte für die Stator- und Rotorströme in der Lookup-Tabelle als Funktion des Referenzdrehmoments hinterlegt sind, und wobei die Maximalwerte zuvor festgelegte, maximal zulässige Verluste der Synchronmaschine charakterisieren, und

- eine Verarbeitungseinheit, die dazu ausgebildet ist, die Maximalwerte für die Stator- und Rotorströme aus Betriebsparametern, die den Zustand der Synchronmaschine repräsentieren, zu bilden, die weiter dazu ausgebildet ist, die Referenzwerte für Stator- und Rotorströme mit den entsprechenden Maximalwerten für Stator- und Rotorströme zu vergleichen und die weiter dazu ausgebildet ist, das vorgegebene Referenzdrehmoment um einen Drehmomentwert zu reduzieren, wenn zumindest ein Referenzwert für Stator- und Rotorströme den entsprechenden Maximalwert erreicht oder überschreitet.

Die vorliegende Erfindung wird nachfolgend anhand der in den Figuren dargestellten Ausführungsbeispiele näher erläutert, wobei geiche oder äquivalente Elemente mit gleichen Bezugszeichen versehen sind. Es zeigt

Figur 1    schematisch den Rotor einer fremderregten Synchronmaschine und ein an den magnetischen Rotorfluss orientiertes dq-Koordinatensystem,

Figur 2    in einem Signalflussplan exemplarisch die Struktur einer Stromregelung für eine fremderregte Synchronmaschine,

Figur 3    in einem Sankey-Diagramm die wesentlichen Verlustkomponenten einer fremderregten Synchronmaschine

Figur 4    schematisch in einem Diagramm ein Prinzip zur Drehmomentreduktion für die Stromregelung einer fremderregten Synchronmaschine und

Figur 5    in einem Signalflussplan exemplarisch ein zur Drehmomentregelung mit einer überlagerten Drehmomentregelung für die Stromregelung einer fremderregten Synchronmaschine gemäß dem Schema in Figur 4,

Figur 6    schematisch einen Triebstrang für ein Elektrofahrzeug mit einer Synchronmaschine, einem Umrichter, einer Regelungsvorrichtung und einem Energiespeicher und

Figur 7    schematisch wesentliche Komponenten einer Regelungsvorrichtung für die Stromregelung einer Synchronmaschine.

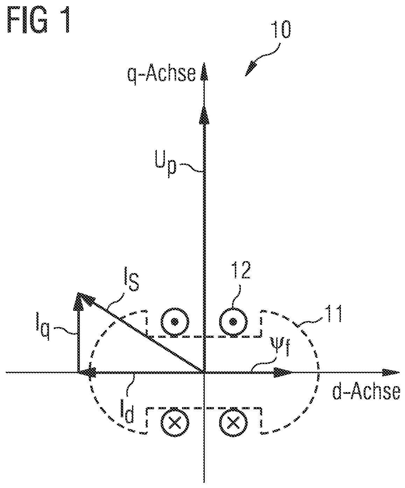

Elektrische Maschinen, insbesondere Synchronmaschinen werden gemeinhin mittels einer Vektorregelung, auch feldorientierte Regelung genannt, unter Nutzung eines Umrichters geregelt. Zur Implementierung einer feldorientierten Regelung wird ein kartesisches Koordinatensystem 10 eingeführt, das eine d- und eine q-Achse aufweist, wobei die d-Achse am magnetischen Rotorfluss (bzw. Erregerfluss) orientiert ist, so dass das Koordinatensystem rotorfest mit der Rotordrehzahl rotiert. Das vereinfacht regelungstechnisch die Handhabung der Modellgleichungen. In Figur 1 ist beispielhaft ein Rotor 11 einer fremderregten Synchronmaschine mit ausgeprägten Rotorpolen in Form eines Schenkelpolrotors dargestellt. Dieser Rotor weist eine Rotorwicklung 12 auf, wobei die Bestromungsrichtung (Kreuz: Strom fließt in die Zeichenebene; Punkt: Strom tritt aus der Zeichenebene heraus) angedeutet ist.

Aus der Bestromungsrichtung ergibt sich ein Rotorfluss $\Psi_f$, der auf die d-Achse des dq-Koordinatensystems gelegt ist. Orthogonal zur d-Achse befindet sich die q-Achse dieses Koordinatensystems. In diesem dq-Bezugssystem lässt sich ein Statorstromzeiger $I_s$ über eine d-Komponente (Stromzeiger) $I_d$ und eine q-Komponente (Stromzeiger) $I_q$ ausdrücken. Im Folgenden wird bei vektoriellen Größen zur Vereinfachung auf die Vektornotation verzichtet. Eine Polradspannung $U_p$ der Synchronmaschine ist, wie gezeigt, in der q-Achse des dq-Bezugssystems orientiert. Im abgebildeten Beispiel befindet sich der Stromzeiger $I_d$ auf der negativen d-Achse entgegen dem Rotorfluss $\Psi_f$. Man spricht in diesem Fall von Feldschwächebetrieb, da der Strom (-zeiger) $I_d$ eine Flusskomponente (z.B $\Psi_d$) erzeugt, die dem Erregerfluss $\Psi_f$ entgegen gerichtet ist, so dass der resultierende Fluss reduziert wird. Bei fremderregten Synchronmaschinen kann die Feldschwächung über den gegenüber permanenterregten Maschinen zusätzlichen Freiheitsgrad eines variierbaren Erregerstroms $I_f$ durchgeführt werden.

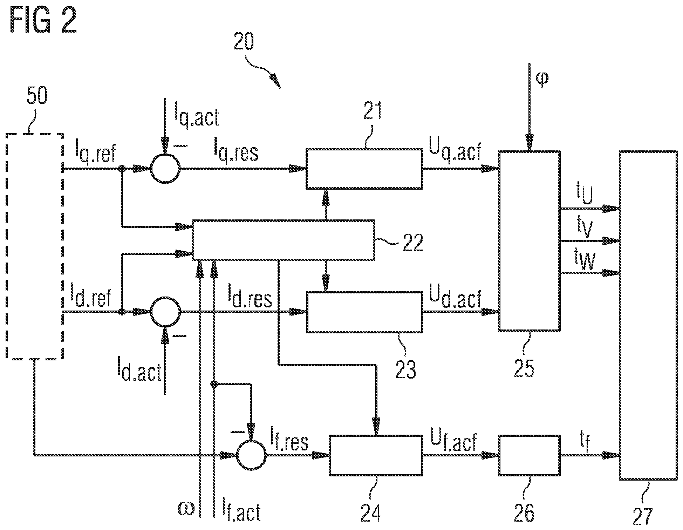

In Figur 2 ist beispielhaft der Signalflussplan einer möglichen Strom- bzw. Drehmomentregelung für eine fremderregte Synchronmaschine bezüglich des dq-Bezugssystems gezeigt. Diese Regelungsstruktur weist eine Referenzstromverarbeitung und ein Derating 50 auf, die Referenzwerte $I_{q.ref}$ und $I_{d.ref}$ für die Stromregelung, also einen Stromzeiger für eine Stromzeiger-basierte feldorientierte Drehmomentregelung, bereitstellt. Für $I_{q.ref}$, dem Referenzwert der q-Komponente des Statorstroms, sowie für $I_{d.ref}$, dem Referenzwert für die q-Komponente des Statorstroms, ist jeweils ein PI-Stromregler 21, 23 vorgesehen. Eine Vorsteuerung 22 für die d- sowie für die q-Komponente des Statorstroms beaufschlagt die beiden PI-Regler mit einem Wert, der unabhängig von den Zuständen der Regelstrecke (Regelstrecke: z.B.

Synchronmaschine und Umrichter), insbesondere unabhängig von den ermittelten in der Maschine herrschenden aktiven Strömen $I_{q.akt}$, $I_{d.akt}$ ist. Die aktiven Ströme $I_{q.akt}$, $I_{d.akt}$ repräsentieren den in der Regelstrecke tatsächlich fließenden Statorstrom im dq-Bezugssystem. Die Vorsteuerung (engl. feedforward control) ermöglicht die Berücksichtigung des aufgrund des Sollwertverlaufs zu erwartenden Stellgrößen-Bedarfs, wobei die d- sowie die q-Komponente bei einer Stromregelung als Stell- bzw. Führungsgrößen betrachtet werden können. Die Vorsteuerung dient damit im Wesentlichen dazu, das Führungsverhalten der Stromregelung durch Kompensation von Schalttotzeiten zu verbessern, ohne die Stabilität der Regelung zu gefährden.

Aus der erfindungsgemäßen Referenzstromverarbeitung mit Derating 50 resultiert ein Erregerstrom $I_{f.ref}$, der ebenfalls über einen PI-Regler 24 geregelt wird. Die PI-Stromregler 21, 23, 24 liefern entsprechende Spannungen $U_{q.ref}$, $U_{d.ref}$ und $U_{f.ref}$, wobei die Statorspannungen wie $U_{q.ref}$, $U_{d.ref}$ die Ströme im dq-System beschrieben werden. Die Spannungen $U_{q.ref}$, $U_{d.ref}$ und $U_{f.ref}$ werden einem Schaltzeitpunktprozessor 25, 26 zugeführt. Ausgangssignale $t_U$, $t_V$, $t_W$, $t_f$ der Schaltzeitpunktprozessoren 25, 26 werden wiederum der Leistungsstufe mit Umrichter 27 zugeführt, die letztlich die Leistung, mit der Synchronmaschine beaufschlagt wird steuert. Für die Statorgrößen, insbesondere die Statorspannungen $U_{q.ref}$, $U_{d.ref}$ sollte vorteilhaft eine Transformation aus dem dq-System beispielsweise in ein am Stator orientiertes Koordinatensystem erfolgen. Dazu wird beispielsweise dem Schaltzeitpunktprozessor 25 der Polradwinkel $\varphi_P$ zugeführt. Der Polradwinkel $\varphi_P$ (auch Lastwinkel) ist jener Winkel, unter dem das Polrad einer Synchronmaschine (in der Regel der Rotor) dem von der Statorwicklung generierten Drehfeld abhängig davon, ob sich die Maschine im Motor-oder Generatorbetrieb befindet, vor- bzw. nacheilt. Eine derartige Transformation aus dem dq-System beispielsweise in ein statorfestes Koordinatensystem kann beispielsweise eine inverse Park-Clark-Transformation sein.

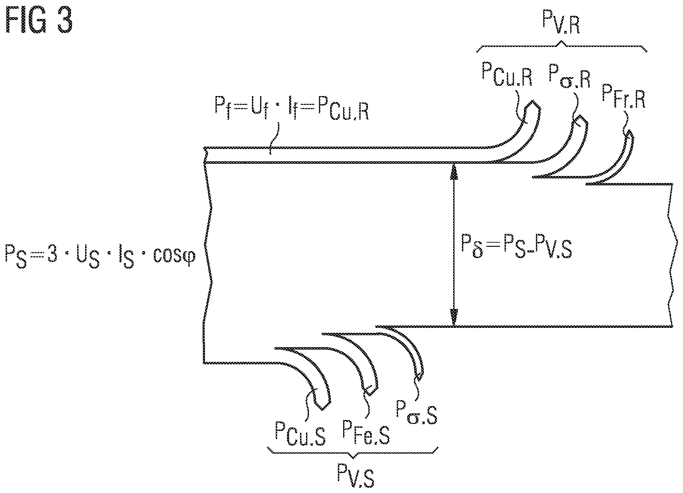

Ein wesentlicher Aspekt bei der Stromregelung von Synchronmaschinen, insbesondere von als Antriebsaggregat in Kraftfahrzeugen verwendeten fremderregten Synchronmaschinen, ist die Verlustreduktion des Antriebssystems bzw. des Triebstrangs (zum Triebstrang gehören z.B.: elektrische Maschine, Welle, Differentialgetriebe, Umrichter, elektrischer Energiespeicher (z.B. bei mobilen Anwendungen), Regelungsvorrichtung). In Figur 3 sind anhand eines Sankey-Diagramms die wesentlichen Verlustkomponenten in einer fremderregten Synchronmaschine im motorischen Betrieb gezeigt. Dem Stator wird eine Leistung $P_S=3\cdot U_S\cdot I_S\cdot\cos\varphi$ zugeführt, wobei $U_S$ die Statorspannung, $I_S$ in diesem Fall der Betrag des Statorstroms und $\varphi$ die (zeitliche) Phasenverschiebung zwischen Statorstrom und -spannung sind. Der Stator ist verlustbehaftet, wobei sich eine im Stator dissipierte Verlustleistung $P_{V.S}$ aus Kupferverlusten $P_{Cu.S}$, Eisenverlusten (insbesondere Ummagnetisierungsverlusten) $P_{Fe.S}$ und Streuverlusten $P_{\sigma.S}$ zusammensetzt. Den Rotor erreicht die Luftspaltleistung $P_\delta=P_S-P_{V.S}$. Die Luftspaltleistung $P_\delta$ wird geschmälert durch Rotorverluste $P_{V.R}$, wobei eine an der Rotorwelle abgegebene mechanische Leistung $P_{mech}=M_{mech}\cdot\omega_{mech}$ ($M_{mech}$: Drehmoment an der Welle; $\omega_{mech}$: Winkelgeschwindigkeit der Welle) die Luftspaltleistung $P_\delta$ abzüglich der Rotorverluste $P_{V.R}$ ist. Die Rotorverluste $P_{V.R}$ setzen sich im Wesentlichen zusammen aus Kupferverlusten $P_{Cu.R}$ der Rotorwicklung, Streuverlusten $P_{\sigma.R}$ im Rotor und Reibungsverlusten $P_{Fr.R}$, wie z.B. Lager- und Luftreibung.

Bei einer fremderregten Synchronmaschine wird dem Rotor eine Leistung $P_f=U_f\cdot I_f=P_{Cu.R}$ zugeführt, wobei $U_f$ die Spannung an der Rotorwicklung und $I_f$ der Erregerstrom in der Rotorwicklung ist. Üblicherweise sind die dem Rotor zugeführten elektrische Größen konstant; d.h., es handelt sich um Gleichströme und - spannungen. Bei der Auslegung der Stromregelung werden insbesondere die Statorströme $I_S$ und der Rotorstrom $I_f$ geregelt. Über den Rotorstrom $I_f$ können einerseits die Kupferverluste im Rotor $P_{Cu.R}$, die proportional zum Quadrat des Erregerstroms $I_f$ sind, und andererseits die Eisenverluste im Stator $P_{Fe.S}$ beeinflusst werden. Der im Rotor gebildete magnetische Erregerfluss $\Psi_f$ ist proportional zum Erregerstrom $I_f$ im Rotor.

Der Rotorfluss $\Psi_f$ ist vorwiegend verantwortlich für die statorseitigen Eisenverluste $P_{Fe.S}$, da das Statorblechpaket bei rotierendem Rotor ein sich über der Zeit änderndes Magnetfeld erfährt, wodurch neben dem Durchlaufen der Materialhysterese (der BH-Kurve) zusätzlich Wirbelströme gebildet werden. So können über den Erregerstrom im Rotor $I_f$ insbesondere die Eisenverluste im Stator $P_{Fe.S}$ beeinflusst werden. Vom Betrag des Erregerstroms sind unmittelbar abhängig die Kupferverluste bzw. die ohmschen Verluste in der Rotorwicklung $P_{Cu.R}$. Der Betrag des Statorstroms ist insbesondere verantwortlich für die Kupferverluste bzw. die ohmschen Verluste $P_{Cu.S}$ in der Statorwicklung. Mit der vorliegenden Erfindung werden insbesondere die maximalen Verluste in der elektrischen Maschine begrenzt. Dies dient einerseits dazu, eine thermische Überlastung der Maschine zu verhindern und, da elektrische Maschinen beispielsweise in Elektrofahrzeugen eingesetzt werden können, den Verbrauch elektrischer Energie z.B. aus einem Ackumulator zu reduzieren, was für mobile Anwendungen sehr wichtig ist.

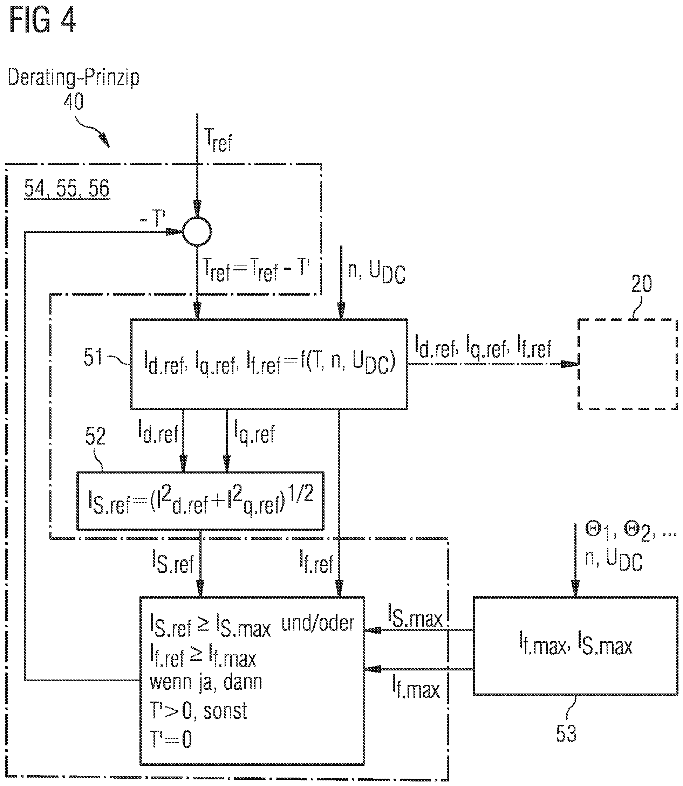

In Figur 4 ist anhand eines Diagramms beispielhaft dargestellt, wie die Verluste der Synchronmaschine über ein Strom-Derating-Methode 40 begrenzt werden können. Ausgangspunkt hierbei ist in der Regel eine dreidimensionale Lookup-Tabelle, in der die Ströme $I_{d.ref}$, $I_{q.ref}$, $I_{f.ref}$ jeweils als Funktionen von einem Referenzdrehmoment $T_{ref}$, Drehzahl $n$ oder Zwischenkreisspannung $U_{DC}$ gespeichert sind. Für eine bestimmte Drehzahl $n$, ein bestimmtes Referenzdrehmoment $T_{ref}$ und eine bestimmte Zwischenkreisspannung $U_{DC}$ ergeben sich die Referenzwerte für Statorströme $I_{d.ref}$, $I_{q.ref}$ (jeweils bezüglich des dq-Bezugssystems) und für den rotorseitigen Erregerstrom $I_{f.ref}$, die der Stromregelung zugeführt werden. Mit der Bestimmung der Referenzwerte für die einzelnen Ströme sollen letztlich übereinstimmende Werte für gewünschtes und tatsächliches Drehmoment zur Verfügung gestellt werden, um den erfindungsgemäßen verlustoptimalen Betrieb bezüglich der wesentlichen Verlustkomponenten der Synchronmaschine (siehe Figur 3) zu gewährleisten unter Berücksichtigung der begrenzenden Parameter, wie zum Beispiel der Zwischenkreisspannung. Die Verlustoptimierung selbst wird beispielsweise numerisch anhand eines Simulationsmodells iterativ für die drei Ströme $I_{d.ref}$, $I_{q.ref}$, $I_{f.ref}$ abhängig von der Drehzahl n, vom Referenzdrehmoment $T_{ref}$ und von der Zwischenkreisspannung $U_{DC}$ durchgeführt. Es kann vorgesehen werden, die drei Referenzströme $I_{d.ref}$, $I_{q.ref}$, $I_{f.ref}$ in einer Lookup-Tabelle 51 als Funktion des Referenzdrehmoments $T_{ref}$, der Drehzahl n sowie der Zwischenkreisspannung $U_{DC}$ abzuspeichern, d.h.

$$I_{d.ref}, I_{q.ref}, I_{f.ref} = f(T_{ref}, n, U_{DC}),$$

sodass die verlustoptimalen Referenzwerte für die Ströme interpoliert werden können. Daraus resultiert also aus einer Offline-Simulation eine Lookup-Tabelle mit verlustoptimierten Referenzströmen für maximal mögliche Drehmomente.

Die Referenzwerte müssen nicht zwingend explizit Referenzwerte für Stator und/oder Rotorströme, beispielsweise im dq-Bezugssystem, sein. Alternativ oder zusätzlich können auch Hilfsgrößen verwendet werden, die repräsentativ sind für Stator und/ oder Rotorströme. Solche Hilfsgrößen können sich beispielsweise aus den mathematischen bzw. numerischen Modellen ergeben, die zur Generierung der Lookup-Tabellen verwendet werden. Eine Hilfsgröße kann beispielsweise aus dem Verhältnis von Rotorstrom und der q-Komponente und/oder der d-Komponente des Statorstroms ermittelt werden. Die Verwendung von Hilfsgrößen kann insofern vorteilhaft sein, als dass in bestimmten Fällen eine Transformation in das dq-Bezugssystem des Rotors überflüssig wird, was reduzierten Rechenaufwand bedeutet. Die zulässigen Maximalwerte werden entsprechend auf die Hilfswerte umgerechnet.

Die Verwendung von Lookup-Tabellen ist bei der Regelung insbesondere von elektrischen Maschinen sehr vorteilhaft, da die magnetisch aktiven Bestandteile in weiten Bereichen ausgeprägt nichtlineares Verhalten aufweisen. Nichtlineare Charakteristika lassen sich durch numerische Approximation mittels einer Vielzahl geeigneter Maschinenmodelle abbilden und in Lookup-Tabellen hinterlegen. Insbesondere die numerische Approximation unter Verwendung von FE-Modellen (numerische Maschinenmodelle nach der Methode der finiten Elemente) sind in der Lage, Nichtlinearitäten auch im Sättigungsbereich exakt abzubilden. Zwar erfordern diese Strategien einen beträchtlichen Speicheraufwand für die resultierenden Lookup-Tabellen, bieten aber gegenüber Regelungskonzepten mit festen, analytisch geschätzten Parametern (engl. lumped parameters) die Vorteile höherer Stabilität, höherer Dynamik sowie besserer stationärer Regelgenauigkeit.

Um während des Betriebs einer fremderregten Synchronmaschine in Echtzeit eine hohe Dynamik der Stromregelung bei verlustoptimalem Betrieb zu erreichen, wird erfindungsgemäß eine Rückkopplung über eine überlagerte Drehmomentregelung vorgeschlagen, die das Referenzdrehmoment $T_{ref}$ bei Bedarf reduziert, wodurch über die Lookup-Tabelle 51 letztlich die Referenzströme herabgesetzt werden. Dazu kann zunächst beispielsweise der Betrag 52 des Statorstroms

$$I_{S.ref} = \left| \bar{I}_{S.ref} \right| = \sqrt{I_{d.ref}^2 + I_{q.ref}^2}$$

aus den Referenzwerten für die einzelnen Statorstromkomponenten bezüglich des dq-Systems gebildet werden. Aus Betriebsparametern, die den Zustand der Regelstrecke, also insbesondere der Synchronmaschine, repräsentieren, z.B. der Drehzahl n, der Zwischenkreisspannung $U_{DC}$ und einer Vielzahl von Temperaturen $\theta_1$, $\theta_2$, etc. können über ein Strom-Derating 53 Maximalwerte, beispielsweise für die Beträge des Statorstroms $I_{S.ref}$ und des Erregerstroms $I_{f.ref}$ gebildet werden. Das Strom-Derating 53 ist so ausgelegt, dass diese Maximalwerte beispielsweise zuvor festgelegte maximale Verluste $P_{V.S}$, $P_{V.R}$ der Synchronmaschine charakterisieren. Wie hoch diese Verluste im Einzelnen sein dürfen, ist abhängig davon, wo die Maschine verbaut ist und wie sie bezüglich ihres Designs (z.B: Wicklungstyp, Rotortyp usw.) beschaffen ist. Die Maximalwerte für die Ströme werden erfindungsgemäß mit den Referenzwerten aus der Lookup-Tabelle 53 verglichen. Erreicht oder übersteigt zumindest einer der Referenzwerte aus der Lookup-Tabelle die aus dem Strom-Derating ermittelten Maximalwerte, dann ist das vorgegebene Referenzdrehmoment zu hoch und muss um einen bestimmten Wert T' reduziert werden, so dass die Maximalwerte für die Ströme und damit die maximal zulässigen Verluste erreicht oder unterschritten werden.

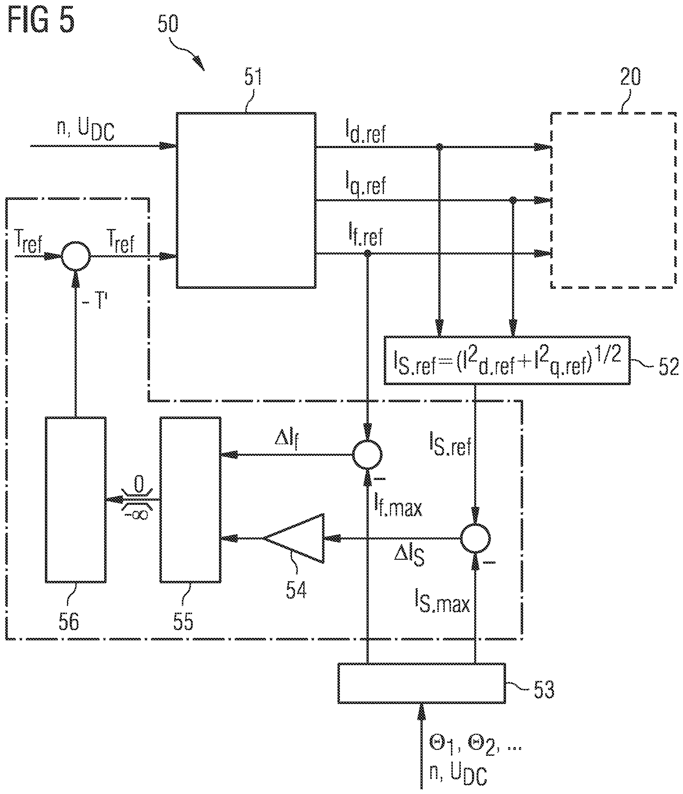

In Figur 5 ist exemplarisch in einem Signalflussplan mit einer Referenzstromverarbeitung mit Derating 50 gezeigt, wie insbesondere ein Strom-Derating 53 mit einer überlagerten Drehmomentregelung 56 zur Drehmomentreduzierung für die Stromregelung einer fremderregten Synchronmaschine regelungstechnisch implementiert werden kann. So werden einen Betriebspunkt repräsentierende Betriebsparameter als Führungsgrößen vorgegeben und aus der Lookup-Tabelle 51 Referenzwerte für die einzelnen Ströme, beispielsweise bezüglich des dq-Systems, gebildet und der Stromregelung 20 zugeführt. Aus den Referenzwerten für die d- und q-Komponenten des Statorstroms kann der Betrag des Referenzwerts des Statorstroms $I_{S.ref}$ gebildet werden. Mit geeigneten Messeinrichtungen (zum Beispiel Drehzahl- und Temperatursensoren) werden den Zustand der Regelstrecke repräsentierende Betriebsparameter wie die Drehzahl n, die Zwischenkreisspannung $U_{DC}$ und eine Vielzahl von in der Synchronmaschine herrschenden Temperaturen $\theta_1$, $\theta_2$, etc ermittelt. Hierbei handelt es sich um real in der Maschine herrschende Betriebsbedingungen bzw. -zustände.

Insbesondere die ermittelten Temperaturen können ein Maß für die Verluste in der Maschine sein. Über das Strom-Derating 53 werden aus diesen Betriebsbedingungen Maximalwerte für Statorstrom $I_{S.max}$ und Erregerstrom $I_{f.max}$ ermittelt. Maßgeblich sind besonders die Temperaturen der Einzelkomponenten, also beispielsweise des Stators und des Rotors der Synchronmaschine, der Umrichter- sowie der Erregerendstufe (z.B. die Leistungshalbleiter). Diese Temperaturen können während des Betriebs gemessen und/oder modelliert werden. Eine Modellierung der Temperaturen kann insbesondere dann vorteilhaft sein, wenn eine messtechnische Ermittlung mit großem Aufwand verbunden ist. Beispielsweise kann es notwendig sein, eine Vielzahl von Temperatursensoren im Rotor, insbesondere an der Rotorwicklung anzubringen, um die thermischen Verhältnisse im Rotor möglichst realitätsnah abzubilden. In diesem Fall müssen diese Temperatursensoren etwa über Schleifringe elektrisch zugänglich gemacht werden. Die mögliche Anzahl an Schleifringen und damit die Anzahl an Messpunkten ist jedoch stark begrenzt. Ein thermisches Modell kann hier zusätzlich zu Sensoren oder allein verwendet werden. Aus den Referenzwerten für die Ströme sowie den entsprechenden Maximalwerten wird jeweils eine Regeldifferenz gebildet und einem Regeldifferenzbaustein 55 zugeführt.

Zumindest die Differenz aus Referenzwert für den Statorstrom und Maximalwert für den Statorstrom $\Delta I_S = I_{S.ref} - I_{S.max}$ kann dem Regeldifferenzbaustein 55 über eine Skalierung 54 zugeführt werden, um zur Regeldifferenz aus den Erregerströmen $\Delta I_f = I_{f.ref} - I_{f.max}$ identische Bedingungen zu erreichen. Die Größenordnungen des thermisch wirksamen Statorstroms (Effektivwert des Statorstroms) und des Rotorgleichstroms sind unterschiedlich. Beispielsweise kann der Statorstrom Effektivwerte von etwa 300A annehmen, der Rotorgleichstrom hingegen beispielsweise nur Werte im Bereich von 18A. Um dennoch jeweils ein geeignetes Regelkreisverhalten der überlagerten erfindungsgemäßen Drehmomentregelung zu erreichen, kann eine Normierung der Ströme entweder auf den Stator- oder auf den Rotorstrom erfolgen. Im vorliegenden Beispiel wird die Regeldifferenz des Statorstroms $\Delta I_S$ skaliert, wodurch eine Normierung des Statorstroms auf den Rotorstrom erzielt wird. Ein überlagerter Drehmomentregler 56 erhält über den Regeldifferenzbaustein 55 eine Anweisung, das Referenzdrehmoment $T_{ref}$ um einen Drehmomentwert T' zu reduzieren, wenn die Regeldifferenzen $\Delta I_S$, $\Delta I_f$ ein bestimmtes Ausmaß, welches vom Anwendungsfall abhängig ist, erreicht haben. Die Schwellwertbestimmung ist bevorzugt so ausgelegt, dass der überlagerte Drehmomentregler 56 das Referenzdrehmoment $T_{ref}$ lediglich beliebig reduzieren, nicht aber erhöhen kann.

Um eine möglichst hohe Regeldynamik bei der erfindungsgemäßen Drehmomentregelung zu erzielen ist ein schneller Regelkreis für dem Rotorstrom (Erregerstrom) erforderlich. Da die Statorzeitkonstante wesentlich niedriger ist als die Rotorzeitkonstante wirkt die Dynamik des Regelkreises für den Rotorstrom als begrenzender Faktor für die gesamte Stromregelung. Die für die Regelung relevanten Zeitkonstanten werden von der Rotor- bzw. Statorinduktivität sowie von der Rotorträgheit bestimmt. Daher trägt insbesondere die Regelreserve für den Rotorstrom essentiell zur Dynamik des entsprechenden Regelkreises bei.

Für die Ermittlung der Maximalwerte für den Statorstrom sowie den rotorseitigen Erregerstrom über das Strom-Derating 53 kann eine Schätzung der Rotortemperatur herangezogen werden. Da der Rotor aktiv durch die ohmschen Verluste (Kupferverluste) in der Rotorwicklung und die rotorseitigen Streuverluste erhitzt wird, kann eine erfindungsgemäße Herabsetzung des Rotorstroms während des Betriebs der Synchronmaschine erforderlich werden. Die Rotortemperatur kann beispielsweise unter Nutzung einer Vielzahl von im Rotor platzierten Temperatursensoren im Mittel geschätzt werden. Dies hat allerdings den Nachteil, dass diese Sensoren beispielsweise über Schleifringe elektrisch zugänglich gemacht werden müssen, was aufwändig und störanfällig ist. Alternativ kann die Rotortemperatur über den gemessenen Erregerstrom und die durch den Regler für den Rotorstrom 26 festgelegte Rotorspannung (z.B. die Sollspannung) ermittelt werden. Auf diese Weise kann näherungsweise die mittlere Rotortemperatur aus dem temperaturabhängigen ohmschen Widerstand der Rotorwicklung bestimmt werden. Um hierbei ausreichende Genauigkeit zu erzielen müssen insbesondere die Nichtlinearität der Leistungsstufe 27 und der Spannungsfall an den Schleifringen, die die Rotorwicklung elektrisch zugänglich machen, auf geeignete Weise kompensiert werden. Normalerweise ist diese Art der Rotortemperaturschätzung nur ab einem bestimmten Erregerstrom möglich.

Die Realisierung einer erfindungsgemäßen Stromregelung mit Derating (bzgl. Drehmoment und Referenzströmen) etwa nach den Signalflussplänen in der Figur 2 und der Figur 5 ist beispielsweise mittels analoger oder digitaler Schaltungstechnik mit einem Mikroprozessor realisierbar. In einer Verarbeitungseinheit des Mikroprozessors können die Signalflusspläne mit deren Bestandteilen dann digital mittels eines geeigneten Progammcodes implementiert werden.

Da die feldorientierte Drehmomentregelung relativ hohe Regelungsdynamik ermöglicht, wird dieses Prinzip bei Synchronmaschinen, auch und gerade bei fremderregten Sychronmaschinen eingesetzt. Ein Ziel der vorliegenden Erfindung ist es, eine verlustoptimierte Regelung, insbesondere eine verlustoptimierte Drehmomentregelung, bei gegenüber gewöhnlicher feldorientierter Regelungsverfahren hoher Regelungsdynamik zur Verfügung zu stellen. Daher wird erfindungsgemäß eine prädiktive bzw. vorausschauende Drehmoment- bzw. Rotorflussregelung vorgeschlagen, die sich besonders für den verlustoptimalen Betrieb einer fremderregten Synchronmaschine eignet.

Wie bereits ausgeführt, ist die für die Dynamik der Drehmomentregelung einer fremderregten Synchronmaschine maßgebliche Zeitkonstante die Rotorzeitkonstante, die viel größer ist als die Statorzeitkonstante. Damit ist der Rotorstromkreis die für die Regelungsdynamik begrenzende Komponente der Drehmomentregelung. Eine prädiktive Drehmomentregelung sieht vor, den Rotorstrom prädiktiv, also vorausschauend, zu erhöhen oder zu senken, bevor die aktiven, in der Maschine vorherrschenden relevanten Parameter (z.B. Drehmoment, Statorstrom, Rotorstrom) zu einer entsprechenden Reaktion der Regelung führen würden, wenn abhängig vom Betriebszustand das Erfordernis einer erhöhten Dynamik bzw. eines höheren oder niedrigeren Drehmoments absehbar ist. Das Erfordernis einer höheren Dynamik, insbesondere einer erhöhten Fahrdynamik beim Einsatz des vorgeschlagenen Regelungsverfahrens in Kraftfahrzeugen, kann beispielsweise durch bekannte Methoden zur Erkennung der Fahrsituation (z.B. Überland- oder Stadtfahrt) ermittelt werden. Dies kann beispielsweise anhand des Fahrerverhaltens mittels geeigneter Algorithmen vorgenommen werden. Wird das Drehmoment beispielsweise mittels einer Erhöhung des Rotorstroms erhöht, bevor es tatsächlich an der Motorwelle gefordert wird, so lässt sich damit die große Rotorzeitkonstante überbrücken, so dass ausschließlich die Statorzeitkonstante für die Regelungsdynamik maßgeblich bleibt. Soll das an der Welle zur Verfügung gestellte Drehmoment, das Ist-Moment, dabei konstant bleiben, muss der Statorstrom entsprechend angepasst werden. Wird an der Welle mehr Drehmoment gefordert, so ist dann lediglich der Statorstrom zügig zu erhöhen. Dies gilt entsprechend auch für den Fall, dass weniger Drehmoment geordert wird, wobei dann die Ströme gesenkt werden. Durch Beeinflussung des Rotorstroms wird unmittelbar der Rotor- bzw. Erregerfluss verändert und damit das Drehmoment verändert.

Im Triebstrang einer elektrischen Maschine, insbesondere einer fremderregten Synchronmaschine, sind eine Vielzahl von Komponenten, beispielsweise Stator- und Rotorwicklung sowie Stator- und Rotorblechpaket angeordnet. Die thermische Belastbarkeit, also die Temperatur, die maximal in den einzelnen Komponenten (über eine bestimmte Zeit hinweg) vorherrschen darf, ist jeweils sehr unterschiedlich. Die Temperaturen, die in den einzelnen Komponenten im Betrieb erreicht wird, ist einerseits abhängig vom zugeführten Strom (im Stator und Rotor) und andererseits davon, wie gut die einzelnen Komponenten gekühlt werden können. In elektrischen Maschinen mit Rotorwicklung neigt beispielsweise die Rotorwicklung axial gesehen punktuell in der Mitte zu thermischer Überlastung, da die Kühlung dort am schlechtesten ist.

Einzelne Komponenten können auch bei dem erfindungsgemäßen verlustoptimalen Betrieb punktuell thermisch überlastet werden. Eine Vielzahl von Sensoren und/oder ein geeignetes thermisches Modell können Auskunft über die momentane thermische Belastung einzelner Komponenten, also momentane Temperaturen, geben. Liegt sie über der thermischen Belastbarkeit, also über den zulässigen maximalen Temperaturen, so müssen Maßnahmen ergriffen werden, um eine Schädigung der entsprechenden Komponenten zu vermeiden. Eine fremderregte Synchronmaschine bietet beispielsweise gegenüber einer permanenterregten Synchronmaschine den Vorteil eines zusätzlichen Freiheitsgrades über den Erregerstrom. Wird etwa in einem bestimmten Betriebspunkt bei verlustoptimalen Strömen und Drehmomenten eine Komponente thermisch überlastet, so sollte die thermische Belastung dieser Komponente, idealerweise bei konstantem Drehmoment an der Welle, reduziert werden. Dazu kann bei einer fremderregten Synchronmaschine das Verhältnis zwischen Stator- und Rotorströmen in einer Weise verändert werden, dass das an der Welle abgreifbare Drehmoment konstant bleibt, sich die thermische Belastung aber beispielsweise vergleichmäßigt. Konkret hieße das, dass etwa bei einer punktuell thermisch überlasteten Rotorwicklung der Rotorstrom reduziert, der Statorstrom aber entsprechend erhöht wird, um eine konstante Drehmomentausbeute zu gewährleisten. An der Welle ändert sich bei diesem Vorgehen idealerweise nichts, allerdings muss in der Regel der verlustoptimale Betrieb der Maschine zumindest vorübergehen ausgesetzt werden.

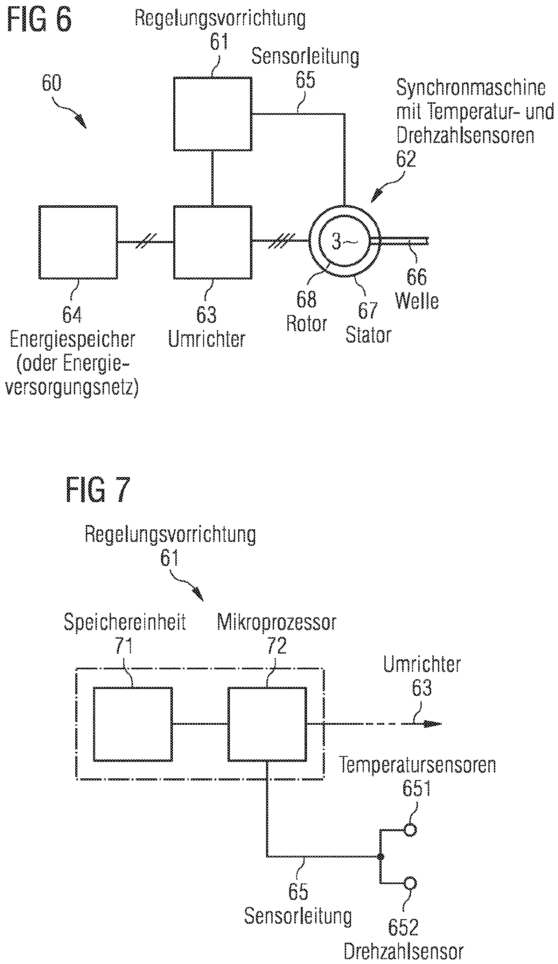

In Figur 6 sind beispielhaft die wesentlichen Bestandteile eines Triebstranges 60 für ein Elektrofahrzeug dargestellt. Prinzipiell allerdings unterscheidet sich der Triebstrang eines Elektrofahrzeugs nicht von anderen Anwendungen von Synchronmaschinen, die einen elektrischen Energiespeicher erfordern. Die wesentlichen Bestandteile des Triebstranges 60 sind ein Umrichter 63, eine Regelungsvorrichtung 61 mit einer Sensorleitung 65, einer Synchronmaschine 62 mit einer Welle 66. Für den beispielhaften Fall einer mobilen Anwendung in einem Hybridfahrzeug oder reinen Elektrofahrzeug ist anstatt eines Energieversorgungsnetzes zusätzlich ein elektrischer Energiespeicher 64 als Energiequelle notwendig. Die vorliegende Erfindung ist jedoch nicht auf mobile Anwendungen beschränkt. Die Synchronmaschine 62 weist, wie jede konzentrische, rotierende elektrische Maschine einen Stator 67 auf, in dem Statorwicklungen zur Generierung eines Drehfeldes angeordnet sein. Außerdem ist in der Synchronmaschine drehbar gelagert ein Rotor 68 angeordnet, der eine Wicklung aufweist, die beispielsweise über Schleifringe derart bestromt wird, dass ein rotorseitiges Erregerfeld entsteht, dass mit dem Drehfeld des Stators in Wechselwirkung treten kann. In der Regel ist der rotorseitige Erregerstrom ein Gleichstrom. Die Synchronmaschine 62 kann dabei zusammen mit einem Verbrennungsmotor für den Vortrieb des Fahrzeugs sorgen; man spricht hierbei von einem Hybridfahrzeug.

Es gibt zahlreiche Antriebskonzepte für Hybridfahrzeuge, die hier nicht weiter diskutiert werden. Andererseits kann die Synchronmaschine 62 auch ohne Verbrennungsmotor in einem reinen Elektrofahrzeug als alleiniges Antriebsaggregat vorgesehen sein. Die Synchronmaschine 62 gehört zum Typ der Drehstrommaschinen. Für Drehstrommaschinen ist die Drehzahl- und Momentenregelung über einen Umrichter 63 weit verbreitet. Über den Umrichter 63 wird der Synchronmaschine 62 die zur Erzeugung mechanischen Drehmoments an der Welle 66 notwendige elektrische Leistung zugeführt. Der Umrichter 63 bezieht diese Leistung bei einem Kraftfahrzeug in Form von Gleichspannung- und -strom typischerweise aus dem elektrischen Energiespeicher 64. Dieser Energiespeicher 64 kann ein elektrochemischer Energiespeicher, beispielsweise ein Akkumulator, sein. Es ist durchaus denkbar einen elektro-chemischen Energiespeicher auch mit elektrostatischen Energiespeichern, z.B. Kondensatorbatterien, zu kombinieren. Der Umrichter 66 wird von einer Regelungsvorrichtung 61 angesteuert, die letztlich dafür sorgt, dass der Synchronmaschine 62 die für den Betriebszustand des Kraftfahrzeugs gerade erforderliche elektrische Leistung (hiervon müssen im Übrigen auch die Verluste im Triebstrang abgedeckt werden) zugeführt wird. Um erfindungsgemäß die Verluste insbesondere in der elektrischen Maschine zu begrenzen, benötigt die Regelungsvorrichtung neben den aktiven Strömen in der Maschine beispielsweise auch Informationen, welche Betriebsbedingungen in der Maschine vorherrschen. Es sind zu diesem Zweck beispielsweise Temperatursensoren 651 und Drehzahlsensoren 652 in der Maschine vorgesehen, deren Messwerte der Regelungsvorrichtung 61 über eine Sensorleitung 65 zugeführt werden.

Die Regelungsvorrichtung 61 weist in einer vorteilhaften Ausführungsform, wie in Figur 7 beispielhaft skizziert, im wesentlichen eine Speichereinheit 71 und einen Mikroprozessor 72, wobei der Mikroprozessor 71 den Umrichter 63 ansteuert. Im Mikroprozessor 71 kann beispielsweise die erfindungsgemäße Stromregelung digital implementiert werden. Dem Mikroprozessor 71 müssen hierzu auch die die in der Maschine vorherrschenden Betriebsbedingungen repräsentierenden Messwerte über die Sensorleitung 65 zugeführt werden. Um die erfindungsgemäße Stromregelung, insbesondere die dynamische Bestimmung von verlustoptimierten Referenzwerten für Ströme und Drehmomente über geeignete Lookup-Tabellen, zu realisieren muss eine mit dem Mikroprozessor 71 verbundene Speichereinheit 71 vorgesehen sein. Der Speicherplatz auf der Speichereinheit 71 muss dabei ausreichend groß sein, um die erfindungsgemäßen Lookup-Tabellen, auf die der Mikroprozessor 71 zugreifen muss, abzuspeichern.

Obwohl sich die oben erörterten Beispiele insbesondere auf Hybridfahrzeuge beziehen, ist die vorliegende Erfindung nicht auf mobile Anwendungen wie etwa in Kraftfahrzeugen beschränkt, sondern vielfältig einsetzbar.

Bezugzeichen

| | |
|---|---|
| 10 | dq-Koordinaten- bzw. Bezugssystem |
| 11 | fremderregter Rotor mit ausgeprägten Polen |
| 12 | Rotorwicklung mit Bestromungsrichtung |
| $U_S$ | Polradspannung |
| $I_S$ | Statorstrom |
| $I_q$ | q-Komponente des Statorstroms (q-Strom) |
| $I_d$ | d-Komponente des Statorstroms (d-Strom) |
| $\Psi_f$ | Rotor- bzw. Erregerfluss |

| | |
|---|---|
| $P_f$ | Erregerleistung im Rotor |
| $P_S$ | zugeführte Leistung im Stator |
| $P_\delta$ | Luftspaltleistung |
| $P_{Cu.S}$ | Kupferverluste (ohmsche Verluste) in der Statorwicklung |
| $P_{Fe.S}$ | Eisen- bzw. Ummagnetisierungsverluste im Stator |
| $P_{\sigma.S}$ | Streuverluste im Stator |
| $P_{V.S}$ | gesamte Statorverluste |
| $P_{V.R}$ | gesamte Rotorverluste |
| $P_{Cu.R}$ | Kupferverluste (ohmsche Verluste) in der Rotorwicklung |
| $P_{\sigma.R}$ | Streuverluste im Rotor |
| $P_{Fr.R}$ | Reibungsverluste |

| | |
|---|---|
| 20 | Stromregelung einer Synchronmaschine |
| 21 | PI-Regler für q-Strom |
| 22 | Vorsteuerung (feed forward control) |
| 23 | PI-Regler für d-Strom |
| 24 | PI-Regler für Erregerstrom |
| 25 | Schaltzeitpunktprozessor |
| 26 | Schaltzeitpunktprozessor |
| 27 | Leistungsstufe mit Umrichter |

| | |
|---|---|
| 50 | Referenzstromverarbeitung und Derating |
| 51 | Lookup-Tabelle (LUT) |
| 52 | Betragsbildung des Statorstroms |
| 53 | Strom-Derating |
| 54 | Skalierung (von Regeldifferenzen) |
| 55 | Regeldifferenzbaustein |
| 56 | Drehmomentregler |

**Patentansprüche**

1.  Regelungsverfahren für eine einen Stator (67) und einen Rotor (68, 11) aufweisende, fremderregte Synchronmaschine (62), mit den Schritten:

    Bereitstellen von Referenzwerten für Stator- und Rotorströme ($I_{S.ref}$, $I_{f.ref}$), wobei der Referenzwert für den Statorstrom ($I_{s.ref}$) und/oder der Referenzwert für den Rotorstrom ($I_{f.ref}$) von einem vorgegebenen Referenzdrehmoment ($T_{ref}$) abhängig ist und die Referenzwerte für die Stator- und Rotorströme ($I_{S.ref}$, $I_{f.ref}$) in einer Lookup-Tabelle (51) als Funktion des Referenzdrehmoments ($T_{ref}$) hinterlegt sind wobei die Referenzwerte ($I_{s.ref}$, $I_{f.ref}$), die in der Lookup-Tabelle (51) hinterlegt sind, jeweils einem verlustminimalen Betriebspunkt, repräsentiert durch entsprechende Betriebsparameter ($T_{ref}$, n, $U_{DC}$), entsprechen;
Bereitstellen von Maximalwerten für Stator- und Rotorströme ($I_{S.max}$, $I_{f.max}$), wobei die Maximalwerte ($I_{S.max}$, $I_{f.max}$) zuvor festgelegte, maximal zulässige Verluste ($P_{V.S}$, $P_{V.R}$) der Synchronmaschine (62) charakterisieren, und wobei die Maximalwerte für die Stator- und Rotorströme ($I_{S.max}$, $I_{f.max}$) aus Betriebsparametern (n, $U_{DC}$, $\theta_1$, $\theta_2$) gebildet werden, die den Zustand der Synchronmaschine repräsentieren;
Vergleichen der Referenzwerte für Stator- und/oder Rotorströme ($I_{S.ref}$, $I_{f.ref}$) mit den entsprechenden Maximalwerten ($I_{S.max}$, $I_{f.max}$) und Reduzieren des Referenzdrehmoments ($T_{ref}$) um einen Drehmomentwert (T') wenn zumindest einer der Referenzwerte ($I_{S.ref}$, $I_{f.ref}$) dessen entsprechenden Maximalwert ($I_{S.max}$, $I_{f.max}$) erreicht oder überschreitet.

2. Regelungsverfahren gemäß Anspruch 1, bei dem die Maximalwerte für Stator- und Rotorströme ($I_{S.max}$, $I_{f.max}$) abhängig sind von Temperaturen ($\theta_1$, $\theta_2$, ...) bestimmter Komponenten der Synchronmaschine (62), von der Drehzahl (n) sowie von der Zwischenkreisspannung ($U_{DC}$).

3. Regelungsverfahren gemäß Anspruch 2, bei dem die Temperatur ($\theta_1$, $\theta_2$, ...) von zumindest einer der folgenden Komponenten der Synchronmaschine (62) berücksichtigt wird: Statorwicklung, Rotorwicklung, Statorblechpaket, Rotorblechpaket und Rotorlager.

4. Regelungsverfahren gemäß Anspruch 3, bei dem zusätzlich die Drehzahl (n) berücksichtigt wird.

5. Regelungsverfahren gemäß einem der vorhergehenden Ansprüche, bei dem der Drehmomentwert (T'), um den das Referenzdrehmoment ($T_{ref}$) reduziert wird abhängig ist von der Abweichung des Referenzwertes des Rotorstroms ($I_{f.ref}$) vom zulässigen Maximalwert des Rotorstroms ($I_{f.max}$) und/oder von der Abweichung der Referenzwerte des Statorstroms ($I_{S.ref}$) vom zulässigen Maximalwert des Statorstroms ($I_{S.max}$).

6. Regelungsverfahren gemäß einem der vorhergehenden Ansprüche, bei dem vor dem Reduzieren des Referenzdrehmoments ($T_{ref}$) die Abweichung des Referenzwerts des Statorstroms ($I_{S.ref}$) vom Maximalwert des Statorstroms ($I_{S.max}$) skaliert wird.

7. Regelungsverfahren gemäß einem der vorhergehenden Ansprüche, bei dem eine Mehrzahl von Temperaturen ($\theta_1$, $\theta_2$, ...) der Synchronmaschine (62) mit einer Mehrzahl von maximal zulässigen Temperaturen verglichen wird und bei dem der Statorstrom ($I_S$) und/oder der Rotorstrom ($I_f$) bei Erreichen und/oder Überschreiten von zumindest einer der Mehrzahl von maximalen Temperaturen so variiert wird, dass zumindest eine der Mehrzahl von maximal zulässigen Temperaturen wieder unterschritten wird.

8. Regelungsverfahren gemäß einem der vorhergehenden Ansprüche mit einer prädiktiven Drehmomentregelung, bei dem der Rotorstrom ($I_f$) prädiktiv erhöht oder gesenkt wird, falls eine höhere oder niedrigere Last an der Welle (66) und/oder eine hohe Regelungsdynamik zu erwarten ist.

9. Regelungsvorrichtung (61), die dazu ausgebildet ist, eine fremderregte Synchronmaschine (62) mit einem Stator (67) und einem Rotor (68) verlustarm zu regeln, aufweisend:

eine Speichereinheit (71), die dazu ausgebildet ist, Referenzwerte für Stator- und Rotorströme ($I_{S.ref}$, $I_{f.ref}$) sowie Maximalwerte für Stator- und Rotorströme bereitzustellen, wobei die Referenzwerte ($I_{S.ref}$, $I_{f.ref}$), die in einer Lookup-Tabelle (51) hinterlegt sind, jeweils einem verlustminimalen Betriebspunkt, repräsentiert durch entsprechende Betriebsparameter ($T_{ref}$, n, $U_{DC}$), entsprechen, wobei der Referenzwert für den Statorstrom und/oder der Referenzwert für den Rotorstrom von einem vorgegebenen Referenzdrehmoment ($T_{ref}$) abhängig ist, und wobei in der Speichereinheit die Referenzwerte für die Stator- und Rotorströme in der Lookup-Tabelle (51) als Funktion des Referenzdrehmoments ($T_{ref}$) hinterlegt sind unc wobei die Maximalwerte ($I_{s.max}$, $I_{f.max}$) zuvor festgelegte, maximal zulässige Verluste ($P_{V.S}$, $P_{V.R}$) der Synchronmaschine (62) charakterisieren, und
eine Verarbeitungseinheit (72), die dazu ausgebildet ist, die Maximalwerte für die Stator- und Rotorströme ($I_{s.max}$, $I_{f.max}$) aus Betriebsparametern (n, $U_{DC}$, $\theta_1$, $\theta_2$), die den Zustand der Synchronmaschine repräsentieren, zu bilden, die weiter dazu ausgebildet ist, die Referenzwerte für Stator- und Rotorströme ($I_{S.ref}$, $I_{f.ref}$) mit den entsprechenden Maximalwerten für Stator- und Rotorströme ($I_{S.max}$, $I_{f.max}$) zu vergleichen und die weiter dazu ausgebildet ist, das vorgegebene Referenzdrehmoment ($T_{ref}$) um einen Drehmomentwert (T') zu reduzieren, wenn zumindest ein Referenzwert für Stator- und Rotorströme ($I_{S.ref}$, $I_{f.ref}$) den entsprechenden Maximalwert ($I_{S.max}$, $I_{f.max}$) erreicht oder überschritet.

**Claims**

1. Regulation method for a separately excited synchronous machine (62) having a stator (67) and a rotor (68, 11), said regulation method having the following steps:

   providing reference values for stator and rotor currents ($I_{S.ref}$, $I_{f.ref}$), wherein the reference value for the stator current ($I_{S.ref}$) and/or the reference value for the rotor current ($I_{f.ref}$) is dependent on a predetermined reference torque ($T_{ref}$) and the reference values for the stator and rotor currents ($I_{S.ref}$, $I_{f.ref}$) are stored in a lookup table (51) as a function of the reference torque ($T_{ref}$), wherein the reference values ($I_{S.ref}$, $I_{f.rer}$), which are stored in the lookup table (51), each correspond to a minimum-losses operating point, represented by corresponding operational parameters ($T_{ref}$, n, $U_{DC}$);
   providing maximum values for stator and rotor currents ($I_{S.max}$, $I_{f.max}$), wherein the maximum values ($I_{S.max}$, $I_{f.max}$) characterize previously fixed, maximum permissible losses ($P_{V.S}$, $P_{V.R}$) of the synchronous machine (62), and wherein the maximum values for the stator and rotor currents ($I_{S.max}$, $I_{f.max}$) are formed from operational parameters (n, $U_{DC}$, $\theta_1$, $\theta_2$) which represent the state of the synchronous machine;
   comparing the reference values for stator and/or rotor currents ($I_{S.ref}$, $I_{f.ref}$) with the corresponding maximum values ($I_{S.max}$, $I_{f.max}$), and
   reducing the reference torque ($T_{ref}$) by a torque value (T') when at least one of the reference values ($I_{S.ref}$, $I_{f.ref}$) reaches or exceeds its corresponding maximum value ($I_{S.max}$, $I_{f.max}$).

2. Regulation method according to Claim 1, in which the maximum values for stator and rotor currents ($I_{S.max}$, $I_{f.max}$) are dependent on temperatures ($\theta_1$, $\theta_2$,...) of specific components of the synchronous machine (62), on the rotation speed (n) and on the intermediate circuit voltage ($U_{DC}$).

3. Regulation method according to Claim 2, in which the temperature ($\theta_1$, $\theta_2$,...) of at least one of the following components of the synchronous machine (62) is taken into consideration: stator winding, rotor winding, stator laminate stack, rotor laminate stack and rotor bearing.

4. Regulation method according to Claim 3, in which, in addition, the rotation speed (n) is taken into consideration.

5. Regulation method according to one of the preceding claims, in which the torque value (T'), reduced by the reference torque ($T_{ref}$), is dependent on the discrepancy between the reference value for the rotor current ($I_{f.ref}$) and the permissible maximum value for the rotor current ($I_{f.max}$) and/or on the discrepancy between the reference values for the stator current ($I_{S.ref}$) and the permissible maximum value for the stator current ($I_{S.max}$).

6. Regulation method according to one of the preceding claims, in which, prior to the reduction in the reference torque ($T_{ref}$), the discrepancy between the reference value for the stator current ($I_{S.ref}$) and the maximum value for the stator current ($I_{S.max}$) is scaled.

7. Regulation method according to one of the preceding claims, in which a plurality of temperatures ($\theta_1$, $\theta_2$,...) for the synchronous machine (62) is compared with a plurality of maximum permissible temperatures, and in which the stator current ($I_S$) and/or the rotor current ($I_f$) is varied when at least one of the plurality of maximum temperatures is reached and/or exceeded in such a way that at least one of the plurality of maximum permissible temperatures is undershot again.

8. Regulation method according to one of the preceding claims with predictive torque regulation, in which the rotor current ($I_f$) is increased or reduced predictively if a relatively high or a relatively low load on the shaft (66) and/or high regulation dynamics is/are expected.

9. Regulation device (61) which is designed to regulate a separately excited synchronous machine (62) with a stator (67) and a rotor (68) with low losses, having:

   a memory unit (71), which is designed to provide reference values for stator and rotor currents ($I_{S.ref}$, $I_{f.ref}$) and maximum values for stator and rotor currents, wherein the reference values ($I_{S.ref}$, $I_{f.ref}$), which are stored in a lookup table (51), each correspond to a minimum-losses operating point, represented by corresponding operational parameters ($T_{ref}$, n, $U_{DC}$), wherein the reference value for the stator current and/or the reference value for the rotor current is dependent on a predetermined reference torque ($T_{ref}$), and wherein, in the memory unit, the reference values for the stator and rotor currents are stored in the lookup table (51) as a function of the reference torque ($T_{ref}$), and wherein the maximum values ($I_{S.max}$, $I_{f.max}$) characterize previously fixed, maximum permissible losses ($P_{V.S}$, $P_{V.R}$) of the synchronous machine (62), and

a processing unit (72), which is designed to form the maximum values for the stator and rotor currents ($I_{S.max}$, $I_{f.max}$) from operational parameters ($n$, $U_{DC}$, $\theta_1$, $\theta_2$) which represent the state of the synchronous machine, which is further designed to compare the reference values for stator and rotor currents ($I_{S.ref}$, $I_{f.ref}$) with the corresponding maximum values for stator and rotor currents ($I_{S.max}$, $I_{f.max}$) and which is further designed to reduce the predetermined reference torque ($T_{ref}$) by a torque value ($T'$) if at least one reference value for stator and rotor currents ($I_{S.ref}$, $I_{f.ref}$) reaches or exceeds the corresponding maximum value ($I_{S.max}$, $I_{f.max}$).

## Revendications

1.  Procédé de régulation pour une machine synchrone à excitation externe (62) présentant un stator (67) et un rotor (68, 11), comprenant les étapes consistant à :

    fournir des valeurs de référence pour des courants de stator et de rotor ($I_{S.ref}$, $I_{f.ref}$), la valeur de référence pour le courant de stator ($I_{S.ref}$) et/ou la valeur de référence pour le courant de rotor ($I_{f.ref}$) dépendant d'un couple de référence prédéfini ($T_{ref}$), et les valeurs de référence pour les courants de stator et de rotor ($I_{S.ref}$, $I_{f.ref}$) étant mémorisées dans une table de consultation (51) en fonction du couple de référence ($T_{ref}$) les valeurs de référence ($I_{S.ref}$, $I_{f.ref}$) qui sont mémorisées dans la table de consultation (51) correspondant respectivement à un point de fonctionnement à perte minimale, représenté par des paramètres de fonctionnement correspondants ($T_{ref}$, $n$, $U_{DC}$);
    fournir des valeurs maximales pour des courants de stator et de rotor ($I_{S.max}$, $I_{f.max}$), les valeurs maximales ($I_{S.max}$, $I_{f.max}$) caractérisant des pertes admissibles maximales ($P_{V.S}$, $P_{V.R}$), préalablement définies, de la machine synchrone (62), et
    les valeurs maximales pour les courants de stator et de rotor ($I_{S.max}$, $I_{f.max}$) étant formées à partir de paramètres de fonctionnement ($n$, $U_{DC}$, $\theta_1$, $\theta_2$) qui représentent l'état de la machine synchrone ;
    comparer les valeurs de référence pour des courants de stator et/ou de rotor ($I_{S.ref}$, $I_{f.ref}$) avec les valeurs maximales correspondantes ($I_{f.max}$, $I_{f.max}$), et
    réduire le couple de référence ($T_{ref}$) d'une valeur de couple ($T'$) si au moins l'une des valeurs de référence ($I_{S.ref}$, $I_{f.ref}$) atteint ou dépasse sa valeur maximale correspondante ($I_{f.max}$, $I_{f.max}$).

2.  Procédé de régulation selon la revendication 1, dans lequel les valeurs maximales pour les courants de stator et de rotor ($I_{S.max}$, $I_{f.max}$) dépendent des températures ($\theta_1$, $\theta_2$, ...) de certains composants de la machine synchrone (62), du couple ($n$) ainsi que de la tension de circuit intermédiaire ($U_{DC}$).

3.  Procédé de régulation selon la revendication 2, dans lequel la température ($\theta_1$, $\theta_2$, ...) d'au moins l'un des composants suivants de la machine synchrone (62) est prise en compte : enroulement de stator, enroulement de rotor, empilage de tôles de stator, empilage de tôles de rotor et palier de rotor.

4.  Procédé de régulation selon la revendication 3, dans lequel la vitesse de rotation ($n$) est également prise en compte.

5.  Procédé de régulation selon l'une quelconque des revendications précédentes, dans lequel la valeur de couple ($T'$), de laquelle le couple de référence ($T_{ref}$) est réduit, dépend de l'écart de la valeur de référence du courant de rotor ($I_{f.ref}$) par rapport à la valeur maximale admissible du courant de rotor ($I_{f.max}$) et/ou de l'écart des valeurs de référence du courant de stator ($I_{S.ref}$) par rapport à la valeur maximale admissible du courant de stator.

6.  Procédé de régulation selon l'une quelconque des revendications précédentes, dans lequel, avant la réduction du couple de référence ($T_{ref}$), l'écart de la valeur de référence du courant de stator ($I_{S.ref}$) par rapport à la valeur maximale du courant de stator ($I_{S.max}$) est mis à l'échelle.

7.  Procédé de régulation selon l'une quelconque des revendications précédentes, dans lequel une pluralité de températures ($\theta_1$, $\theta_2$, ...) de la machine synchrone (62) est comparée avec une pluralité de températures admissibles maximales, et dans lequel le courant de stator ($I_S$) et/ou le courant de rotor ($I_f$), lorsqu'au moins l'une de la pluralité de températures maximales est atteinte et/ou dépassée, sont modifiés de telle sorte qu'au moins l'une de la pluralité de températures admissibles maximales est à nouveau soupassée.

8.  Procédé de régulation selon l'une quelconque des revendications précédentes, comprenant une régulation de couple prédictive, dans lequel le courant de rotor ($I_f$) est augmenté ou diminué de manière prédictive s'il faut s'attendre à une charge supérieure ou inférieure au niveau de l'arbre (66) et/ou à une dynamique de régulation élevée.

**9.** Dispositif de régulation (61) qui est réalisé pour réguler avec peu de pertes une machine synchrone à excitation externe (62) dotée d'un stator (67) et d'un rotor (68), présentant :

une unité de mémoire (71) qui est réalisée pour fournir des valeurs de référence pour des courants de stator et de rotor ($I_{S.ref}$, $I_{f.ref}$), ainsi que des valeurs maximales pour des courants de stator et de rotor, les valeurs de référence ($I_{S.ref}$, $I_{f.ref}$) qui sont mémorisées dans une table de consultation (51) correspondant respectivement à un point de fonctionnement à perte minimale, représenté par des paramètres de fonctionnement correspondants ($T_{ref}$, n, $U_{DC}$), la valeur de référence pour le courant de stator et/ou la valeur de référence pour le courant de rotor dépendant d'un couple de référence prédéfini ($T_{ref}$), et dans lequel, dans l'unité de mémoire, les valeurs de référence pour les courants de stator et de rotor sont mémorisées dans la table de consultation (51) en fonction du couple de référence ($T_{ref}$), et les valeurs maximales ($I_{S.max}$, $I_{f.max}$) caractérisent des pertes admissibles maximales ($P_{V.S}$, $P_{V.R}$), préalablement définies, de la machine synchrone (62), et une unité de traitement (72) qui est réalisée pour former les valeurs maximales pour les courants de stator et de rotor ($I_{S.max}$, $I_{f.max}$) à partir de paramètres de fonctionnement (n, $U_{DC}$, $\theta_1$, $\theta_2$) qui représentent l'état de la machine synchrone, qui est en outre réalisée pour comparer les valeurs de référence pour des courants de stator et de rotor ($I_{S.ref}$, $I_{f.ref}$) avec les valeurs maximales correspondantes pour des courants de stator et de rotor ($I_{S.max}$, $I_{f.max}$), et qui est en outre réalisée pour réduire le couple de référence prédéfini ($T_{ref}$) d'une valeur de couple (T') si au moins une valeur de référence pour des courants de stator et de rotor ($I_{S.ref}$, $I_{f.ref}$) atteint ou dépasse la valeur maximale correspondante ($I_{S.max}$, $I_{f.max}$).

FIG 1

# FIG 2

**FIG 3**

$P_{V.R}$

$P_{Cu.R}$  $P_{\sigma.R}$  $P_{Fr.R}$

$P_f = U_f \cdot I_f = P_{Cu.R}$

$P_S = 3 \cdot U_S \cdot I_S \cdot \cos\varphi$

$P_\delta = P_S - P_{V.S}$

$P_{Cu.S}$  $P_{Fe.S}$  $P_{\sigma.S}$

$P_{V.S}$

## FIG 4

Derating-Prinzip
40

$T_{ref}$

54, 55, 56

$-T'$

$T_{ref} = T_{ref} - T'$

n, $U_{DC}$

20

51 $\quad I_{d.ref}, I_{q.ref}, I_{f.ref} = f(T, n, U_{DC})$ $\qquad I_{d.ref}, I_{q.ref}, I_{f.ref}$

$I_{d.ref}$ $\qquad I_{q.ref}$

52

$I_{S.ref} = (I^2_{d.ref} + I^2_{q.ref})^{1/2}$

$\Theta_1, \Theta_2, ...$
n, $U_{DC}$

$I_{S.ref}$ $\qquad I_{f.ref}$

$I_{S.ref} \geq I_{S,max}$ und/oder
$I_{f.ref} \geq I_{f.max}$
wenn ja, dann
$T' > 0$, sonst
$T' = 0$

$I_{S.max}$

$I_{f.max}, I_{S.max}$

$I_{f.max}$

53

FIG 5

## FIG 6

Regelungsvorrichtung
61

Sensorleitung
65

Synchronmaschine
mit Temperatur- und
Drehzahlsensoren
62

60

3~

66
Welle

68
Rotor

67
Stator

64
Energiespeicher
(oder Energieversorgungsnetz)

63
Umrichter

## FIG 7

Regelungsvorrichtung
61

Speichereinheit
71

Mikroprozessor
72

Umrichter
63

Temperatursensoren
651

65
Sensorleitung

652
Drehzahlsensor

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060126250 A1

- WO 2009003478 A2